# EUROPEAN PATENT SPECIFICATION

(11) **EP 4 263 979 B1**
(45) Date of publication and mention of the grant of the patent: **18.02.2026**
(21) Application number: 21836681.3
(22) Date of filing: 02.12.2021
(51) Int. Cl.: E04H 4/16, G01M 3/18

(54) **BATTERY DISCONNECTION USING WATER SENSING FOR UNDERWATER BATTERY-POWERED POOL CLEANING DEVICES**
BATTERIETRENNUNG MITTELS WASSERERFASSUNG FÜR BATTERIEBETRIEBENE UNTERWASSER-POOL-REINIGUNGSVORRICHTUNGEN
DÉCONNEXION DE BATTERIE PAR DÉTECTION D'EAU POUR DISPOSITIFS IMMERGÉS DE NETTOYAGE DE PISCINE ALIMENTÉS PAR BATTERIE

(30) Priority: 15.12.2020 US 202063125473 P
(43) Date of publication of application: 25.10.2023
(60) Divisional application: 23206694.4
(73) Proprietor: ZODIAC POOL SYSTEMS LLC, Carlsbad, CA 92010 (US)
(72) Inventor: UY, Dindo, Vista, California 92081 (US); BARENG, Eusebio Domingo, Vista, California 92083 (US)
(74) Representative: Weickmann & Weickmann PartmbB
(86) International application number: PCT/US2021/061607
(87) International publication number: WO 2022/132452

(56) References cited:
- EP-A2- 1 454 885
- CN-U- 204 064 594
- US-A1- 2003 221 250
- US-A1- 2005 235 306

## Description

### CROSS-REFERENCE TO RELATED APPLICATION

This application claims the benefit of and priority to U.S. Provisional Application Serial No. 63/125,473 filed December 15, 2020, entitled "Crowbar Circuit for Battery Used in Underwater Device,".

### BACKGROUND

Many underwater devices use batteries to provide power to operate the devices. If a battery in such a device gets wet, there is a risk of permanent damage to the device. Conventional approaches for preventing the battery from getting wet include sealing the chamber in which the battery is held from water intrusion. While this approach may be suitable for some applications, it is susceptible to failure when submerged at great depths and pressures, due to natural degradation of materials, and for other common reasons (e.g., abuse, crashes, etc.). EP 1 454 885 A2 discloses an ozone treatment system for diffusing ozone directly into a volume of water contained in a swimming pool or a tank, comprising a housing placed in the body of water. The system includes an electrical ozone generator mounted in the housing and connected to an electrical power source. An ozone discharge outlet extends from the ozone generator and is in fluid communication with the water. Ozone gas produced in the generator is discharged for diffusion into the surrounding water.
US 2003/0221250 A1 discloses a water level controller for a pool, including a water level sensor immersed in the pool. A processor detects if the sensor senses low water. A transmitter sends a radio frequency signal to a receiver if the processor detects the low water. The receiver turns on a valve to add water to the pool. The transmitter and processor are contained in waterproof housing that also contains a battery. A main power switch is located internally in the housing, and moves between on and off positions by inverting the housing. A wave filter timer within the processor turns on for a selected interval when the processor detects low water. The processor delays the transmitter from sending the signal until the end of the selected interval. The processor further causes the transmitter to send the signal at the end of the selected interval only if the processor continuously detects low water during the selected interval. The receiver has an overfill counter that turns on for a selected interval when the receiver receives one of the signals from the transmitter. The overfill counter causes the valve to remain on until the overfill counter reaches a selected count. The receiver resets the overfill counter prior to reaching the selected count each time that the receiver receives one of the signals from the transmitter.

### SUMMARY

The terms "disclosure," "the disclosure," "this disclosure" and "the present disclosure" used in this patent are intended to refer broadly to all of the subject matter of this patent and the patent claims below. Statements containing these terms should be understood not to limit the subject matter described herein or to limit the meaning or scope of the patent claims below. Embodiments of the subject matter covered by this patent are defined by the claims below, not this summary. This summary is a high-level overview of various aspects of the subject matter of the present disclosure and introduces some of the concepts that are further described in the Detailed Description section below. This summary is not intended to identify key or essential features of the claimed subject matter, nor is it intended to be used in isolation to determine the scope of the claimed subject matter. The subject matter should be understood by reference to appropriate portions of the entire specification of this patent, any or all drawings and each claim.

The invention provides a system for battery-powered swimming pool cleaners or other swimming pool equipment, in accordance with the subject matter of independent claim 1, a circuit board for battery-powered swimming pool cleaners or other swimming pool equipment according to independent claim 3, as well as a battery-powered underwater pool cleaning device according to the subject matter of independent claim 10. One general aspect includes a system for battery-powered swimming pool cleaners or other swimming pool equipment. The system includes a sensing circuit to detect the presence of water. The system also includes a power circuit electrically connected to the sensing circuit and configured to direct power to an electrical load. The system also includes a disabling circuit electrically connected to the sensing circuit and the power circuit, and configured to: receive a signal from the sensing circuit, and responsive to receiving the signal, disable the power circuit from powering the electrical load.

Another general aspect includes a circuit board for battery-powered swimming pool cleaners or other swimming pool equipment. The circuit board includes a sensing circuit including a pair of probes to detect the presence of a liquid. The circuit board also includes a power circuit to power an electrical load. The circuit board also includes an electrical interrupter to interrupt flow of electricity to the power circuit. The circuit board also includes a crowbar circuit to cause the electrical interrupter to interrupt the flow of electricity to the power circuit responsive to receiving a signal from the sensing circuit.

Another general aspect includes a battery-powered underwater pool cleaning device. The battery-powered underwater pool cleaning device includes a compartment that defines an interior volume. The battery-powered underwater pool cleaning device also includes a power source disposed within the interior volume and configured to power the battery-powered underwater pool cleaning device. The battery-powered underwater pool cleaning device also includes circuitry electrically connected to the power source and disposed within the interior volume, and configured to: detect the presence of water in the interior volume, and disable the power to the battery-powered underwater pool cleaning device.

Another general aspect includes a method for battery-powered swimming pool cleaners or other swimming pool equipment. The method includes detecting water intrusion within a compartment of a battery-powered device. The method also includes responsive to detecting the water intrusion, activating a disabling circuit configured to cause an interrupting circuit to interrupt flow of electricity from a battery of the battery-powered device. Other embodiments of this aspect include corresponding computer systems, apparatus, and computer programs recorded on one or more computer storage devices, each configured to perform the actions of the methods. For example, a system of one or more computers can be configured to perform particular operations of the method by virtue of having software, firmware, hardware, or a combination of them installed on the system that in operation causes or cause the system to perform the actions. One or more computer programs can be configured to perform particular operations or actions by virtue of including instructions that, when executed by data processing apparatus, cause the apparatus to perform the actions.

### BRIEF DESCRIPTION OF THE DRAWINGS

The accompanying drawings, which are incorporated into and constitute a part of this specification, illustrate one or more certain examples and, together with the description of the example, serve to explain the principles and implementations of the certain examples.
FIG. 1 illustrates an example battery-powered swimming pool cleaner and a flowchart showing a process for implementing techniques relating electrically disconnecting a battery based on water sensing, according to at least one example;
FIG. 2 illustrates a block diagram of an example system for use in a battery-powered swimming pool cleaner or other pool equipment for implementing techniques relating to electrically disconnecting a battery based on water sensing, according to at least one example;
FIG. 3 illustrates a circuit diagram illustrating elements of the system from FIG. 2 for implementing techniques relating to electrically disconnecting a battery based on water sensing, according to at least one example; and
FIG. 4 illustrates an example flowchart showing a process for implementing techniques relating to electrically disconnecting a battery based on water sensing, according to at least one example.

### DETAILED DESCRIPTION

The subject matter of embodiments of the present disclosure is described here with specificity to meet statutory requirements, but this description is not necessarily intended to limit the scope of the claims. The claimed subject matter may be embodied in other ways, may include different elements or steps, and may be used in conjunction with other existing or future technologies. This description should not be interpreted as implying any particular order or arrangement among or between various steps or elements except when the order of individual steps or arrangement of elements is explicitly described.

Examples are described herein in the context of battery-powered underwater devices for use in pool and spa systems (e.g., a battery-powered swimming pool cleaner or other pool equipment). Those of ordinary skill in the art will realize that the following description is illustrative only and is not intended to be in any way limiting. For example, the techniques described herein can be applied to other underwater devices such as those not used in pool and spa systems. Reference will now be made in detail to implementations of examples as illustrated in the accompanying drawings. The same reference indicators will be used throughout the drawings and the following description to refer to the same or like items.

Many underwater devices such as robotic pool cleaners use a battery or batteries (either primary, such as non-rechargeable, or secondary, such as rechargeable) to provide power to operate the device. If the battery in such application gets wet, it is not advisable to use (drain) the battery or charge it (in case of secondary battery). Using or charging a wet battery, especially one that includes Lithium ion, can be hazardous in addition to risking permanent damage to the battery and other parts of the device.

To avoid the batteries from getting wet in the first place, the batteries are typically placed within a compartment of an underwater device that is sealed against water intrusion. Unfortunately, such sealing may at some point fail, eventually allowing water intrusion.

The devices, systems, and techniques described herein include various circuitry arrangements for electrically isolating a power source such as a battery from an electrical load upon detecting the presence of water within a sealed enclosure of an underwater device. Since water intrusion is more or less inevitable, the embodiments described herein provide an electrical mechanism to safely and securely disconnect the battery, thereby preventing the battery from use and charging.

In an illustrative example, a system for a battery-powered swimming pool cleaner or other swimming pool equipment may include a sensing circuit to detect the presence of water within an enclosure. The system may also include a power circuit electrically connected to the sensing circuit and configured to direct power to an electrical load of the battery-powered swimming pool cleaner or other swimming pool equipment. The system may also include a disabling circuit, sometimes referred to herein as a crowbar circuit, electrically connected to the sensing circuit and the power circuit. The disabling circuit may be configured to receive a signal from the sensing circuit (e.g., an input voltage), and, in response, disable the power circuit from powering the electrical load (e.g., short circuit the circuitry in a manner that causes a fuse to blow). The system may also include a battery to power the electrical load. Disabling the power circuit may include electrically isolating the battery, which may occur when the disabling circuit causes a short circuit in the circuitry, resulting in a voltage spike propagating through circuitry of the system until it causes an electrical interrupter to change from a first state to a second state. The electrical interrupter may be a fuse or a circuit breaker. Thus, this change in state may correspond to the fuse blowing or the circuit breaker tripping. Once this occurs, the battery can no longer be charged nor provide power to the electrical load of the battery-powered swimming pool cleaner or other swimming pool equipment.

is illustrative example is given to introduce the reader to the general subject matter discussed herein and the disclosure is not limited to this example. The following sections describe various additional non-limiting examples of battery-powered swimming pool equipment including sensing and disabling circuits.

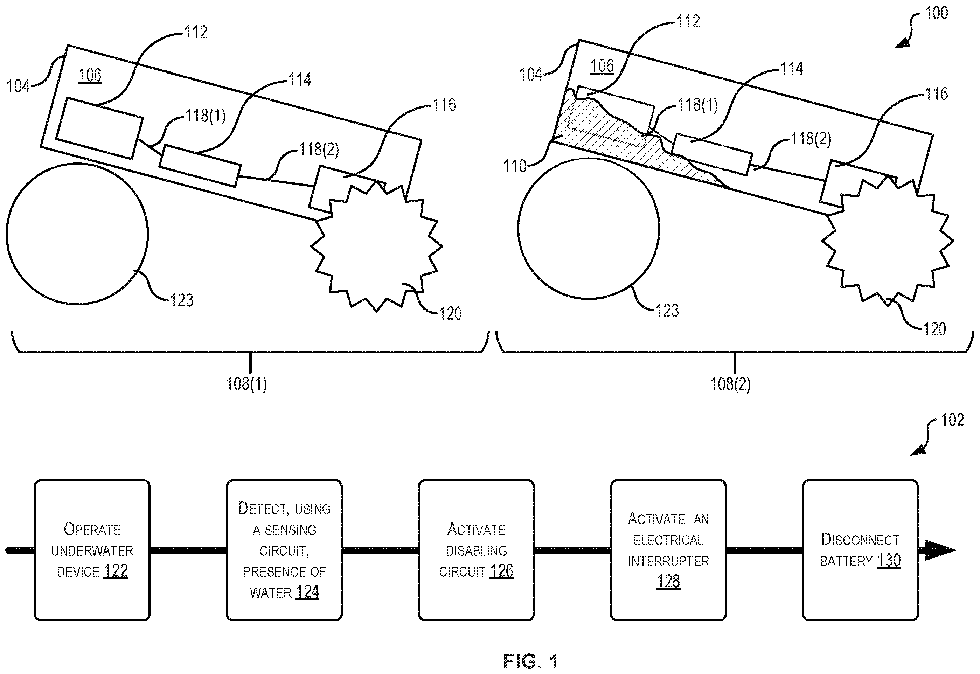

Referring now to the figures, FIG. 1 illustrates an example battery-powered swimming pool cleaner 100 and a flowchart showing a process 102 for implementing techniques relating to electrically disconnecting a battery based on water sensing, according to at least one example. An example of the battery-powered swimming pool cleaner is disclosed in U.S. Patent Application Publication No. 2018/0066444 of van der Meijden, et al. Other battery-powered devices, including automatic swimming pool cleaners and other equipment used in connection with swimming pools and spas that could use the described embodiments, are disclosed U.S. Patent Application Publication No. 2020/0056391 of Lancry, and 2020/0347630 of Durvasula, et al.

The battery-powered swimming pool cleaner 100 may include a body 104 including a compartment 106 that defines an interior volume. The compartment may be subdivided into multiple sub-compartments, resulting in multiple sub-volumes of the interior volume. Components, including electrical components of the battery-powered swimming pool cleaner 100, may be mounted within the compartment 106. The compartment 106 may be configured as a water tight enclosure capable of preventing intrusion of water at various pressure levels. In some examples, the body 104 and/or the compartment 106 may include an access opening to allow access to the interior volume of the compartment 106. Such access may be useful for replacing and/or repairing the components. For example, after an electrical interrupter has been triggered, the access opening may be opened to drain the water, allow the compartment 106 to dry out, and reset and/or replace damaged parts. The access opening may also be configured to prevent water ingress. For example, the access opening may include a gasket or other structure to create a water-tight seal. In some examples, the components are mounted within the compartment during assembly and the compartment is sealed in a way that does not allow user access to the interior volume. In this example, if water intrusion is detected and the electrical interrupter is triggered, the battery-powered swimming pool cleaner 100 may be fully disabled and/or require professional repair.

In FIG. 1, the battery-powered swimming pool cleaner 100 is illustrated in two states, a first state 108(1) and a second state 108(2). In the first state 108(1), the compartment 106 of the battery-powered swimming pool cleaner 100 is devoid of water or other liquid. In this first state 108(1), the battery-powered swimming pool cleaner 100 may be fully functional. In the second state 108(2), water 110 is shown within the compartment 106. The water 110 may have accessed the compartment 106 as a result of a failure or degradation of the water-tight seal of the compartment 106.

The components within the compartment 106 include a battery 112, a circuit board 114, and an electrical load 116. The battery 112 may be any suitable single-use or rechargeable power source. In some examples, the battery 112 may include more than one battery, perhaps included in a battery pack or otherwise wired together. The battery 112 may be any suitable type of battery including, for example, alkaline, Lithium-ion, Lithium polymer, and the like. The battery 112 may be electrically connected to the circuit board 114 via a first electrical connection 118(1), and the circuit board 114 may be electrically connected to the electrical load via a second electrical connection 118(2). Power from the battery 112 may flow through the circuit board 114 and into the electrical load 116 via the electrical connections 118. The circuit board 114, as described in detail in later figures, may include a power circuit or power control circuit to control how the power from the battery 112 is delivered to the electrical load.

The electrical load 116 may include any suitable motor, pump, light, sensor, computing device, networking device, communications device, or the like configured for powering by the battery 112. As shown in FIG. 1, the electrical load 116 may be a scrubber 120 and a set of motive elements, illustrated in FIG. 1 as drive wheels 123. The scrubber 120 may be connected to one or more drive motors and driven either separately or together. The set of drive wheels 123 may be similarly driven by the same one or more drive motors or a different drive motor. The scrubber 120 may function to scrub or otherwise clean a surface of a pool or spa as the battery-powered swimming pool cleaner 100 moves within the pool or spa. The drive wheels 123 may assist in moving the battery-powered swimming pool cleaner 100 along the surface of the pool or spa.

Turning now to the flow diagram depicting the process 102 in FIG. 1,. the process 102 may relate to the operation of the battery-powered swimming pool cleaner 100. At least a portion of the process 102 may be performed by circuitry on the circuit board 114, as shown in more detail herein. The process 102 begins at block 122 by operating an underwater device such as the battery-powered swimming pool cleaner 100. Operating the battery-powered swimming pool cleaner 100 may include a human configuring and enabling the battery-powered swimming pool cleaner 100 to operate. In some examples, once originally configured, the battery-powered swimming pool cleaner 100 may operate more or less autonomously. For example, the battery-powered swimming pool cleaner 100 may operate to clean surfaces of the pool and spa and then alert a user when some action needs to be taken, e.g., clean a filter, charge the battery, etc.

At block 124, the process 102 includes detecting, using a sensing circuit, the presence of water. For example, in the second state 108(2), the sensing circuit, a portion of which may be incorporated into the circuit board 114, may detect the presence of water 110 within the compartment 106. In some examples, the sensing circuit may include a pair of water-sensitive probes that, when water is present, detect a certain resistivity that can be shared with other circuits on the circuit board 114 as a signal of a sensed condition.

At block 126, the process 102 includes activating a disabling circuit. The disabling circuit, which may be incorporated into the circuit board 114, may be activated based on the sensing circuit detecting the presence of water 110. In some examples, the disabling circuit may be a crowbar circuit that is configured to short an electrical system of the circuit board 114 when the disabling circuit receives an electrical signal having some predefined properties. For example, the sensing circuit may send an input signal to the disabling circuit upon detecting the presence of the water.

At block 128, the process 102 includes activating an electrical interrupter. The electrical interrupter, which may be incorporated into the circuit board 114, may be activated based on the disabling circuit shorting the electrical system.

At block 130, the process 102 includes disconnecting the battery from the electrical system. The electrical interrupter, when triggered, may disconnect or otherwise isolate the battery from the circuit board 114 and the electrical load 116. This may function to electrical disconnect the first electrical connection 118(1).

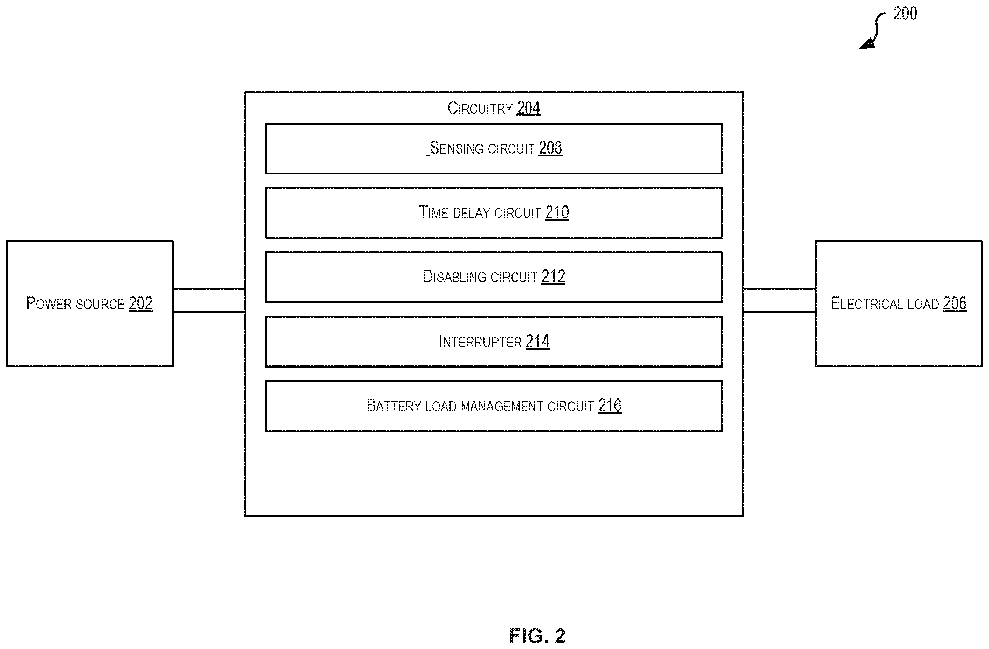

FIG. 2 illustrates a block diagram of an example system 200 for use in a battery-powered swimming pool cleaner or other pool equipment for implementing techniques relating to electrically disconnecting a battery based on water sensing, according to at least one example. The system 200 includes a power source 202, circuitry 204, and an electrical load 206. The power source 202 is an example of the battery 112, the circuitry 204 is an example of the circuit board 114, and the electrical load 206 is an example of the electrical load 116. The power source 202, the circuitry 204, and the electrical load 206 may be electrically connected.

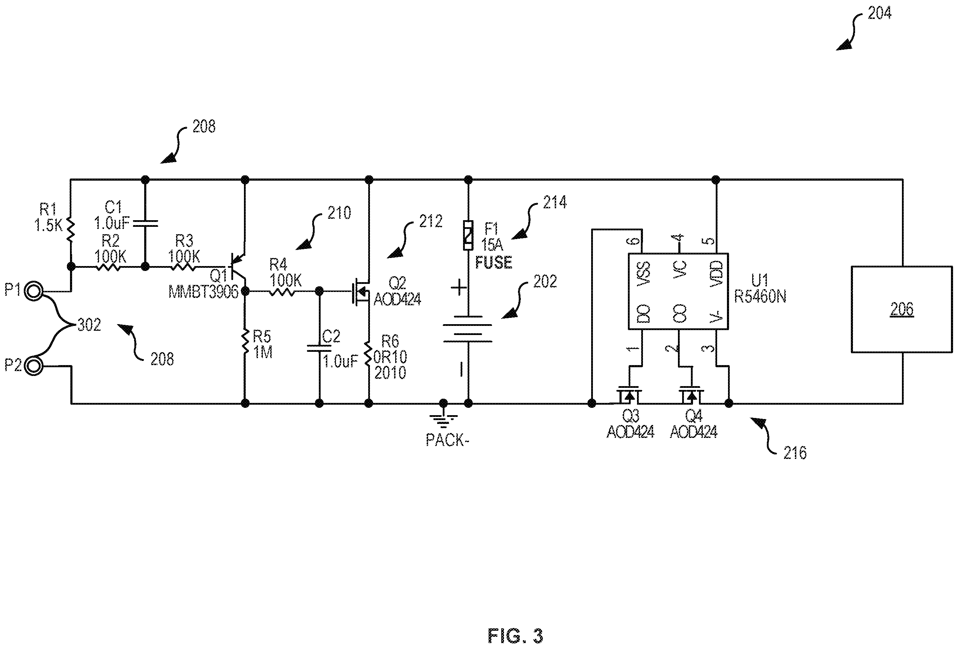

The circuitry 204, which may be incorporated into one or more circuit boards and/or as standalone components that are electrically connected, includes a sensing circuit 208, a time delay circuit 210, a disabling circuit 212, an interrupter 214, and a battery load management circuit 216. FIG. 3 is a circuit diagram 300 illustrating elements of the system 200 for implementing techniques relating to electrically disconnecting a battery based on water sensing, according to at least one example. In FIG. 3, certain circuits of the circuitry 204 have been omitted for purposes of illustrative clarity. Generally, the circuitry 204 may provide capability to control powering of the electrical load 206 by the power source 202 and charging of the power source 202, e.g., by an external charger. The individual circuits will be described with respect to FIGS. 2 and 3. At least some of the circuitry 204 may be mounted to or otherwise formed on and/or within a circuit board such as a printed circuit board.

Beginning first with sensing circuit 208, generally, the sensing circuit 208 may be configured to sense the presence of water at some location and generate an electrical signal of some form that is can be received by one of the elements such as the disabling circuit 212. As shown in FIG. 3, the sensing circuit 208 may include, among other things, a set of water-sensing probes 302 (e.g., labeled P1 and P2) and a resistor R1 that controls the sensitivity of the sensing circuit 208. The water-sensing probes 302 may be integrated as traces within the circuit board and/or may be situated at the end of electrical lead wires connected to the circuit board at one end and having a probe element at a second end. The water-sensing probes 302 may include any suitable combination of electrodes configured to have some level of resistance therebetween. When water is not present, the resistivity will be only the air between them. When water is present, the resistivity will be based on the water. This resistivity, when detected, can be used to generate the signal that is received by the disabling circuit 212.

In some examples, the sensing circuit 208 may include more than one set of water-sensing probes 302. For example, a first set of water-sensing probes 302 may be disposed at a first end of the circuit board and a second set may be disposed at a second end. In some examples, the different sets of water-sensing probes 302 may be disposed at different locations with respect to the device into which they are incorporated. For example, a first set of water-sensing probes 302 may be disposed within a first compartment of the device adjacent the power source 202, while a second set may be disposed within a second compartment of the device adjacent the circuit board upon which the circuitry 204 is mounted. Mounting the water-sensing probes 302 at different locations may allow for water sensing when the device is in different orientations. For example, a robotic pool cleaner, as described herein, may traverse many different surfaces having varying degrees of inclination. The water-sensing probes 302 may therefore be configured to sense water intrusion when the robotic pool cleaner is traversing the different inclinations. In some examples, the sensitivity of the sensing circuit 208 is between 25 and 100 kilo-ohms. In at least one example, the sensitivity of the sensing circuit 208 is about 47 kilo-ohms.

Turning now to the time delay circuit 210, the time delay circuit 210 may be configured to provide an RC time delay to avoid unintentional tripping of the interrupter 214 (labeled F1). In some examples, the time delay circuit 210 may include R2, R3, R4, R5, C1, C2, and Q1.

Turning now to the disabling circuit 212, the disabling circuit 212 may be configured to cause the interrupter 214 to trigger when the sensing circuit 208 detects water. In some examples, the disabling circuit 212 may be referred to as a crowbar circuit. The sensing circuit 208 may send a signal to the disabling circuit 212. In some examples, the signal may be voltage created by the sensing circuit 208 and that is read as an input voltage by the disabling circuit 212. The input voltage may have certain characteristics. The disabling circuit 212 may monitor the input voltage coming into the disabling circuit 212, and when the voltage exceeds a threshold as read from the characteristics such as voltage, the disabling circuit may create a short circuit across the power lines of the circuitry 204, which causes a voltage spike to propagate through the circuitry until it hits the interrupter 214. The interrupter 214 in this example is a fuse. The voltage spike causes the fuse to blow, which disconnects the power source 202 from the rest of the circuitry 204 and the electrical load 206. The disabling circuit 212 may include Q2 and R6. Q2 may be a metal-oxide-semiconductor field-effect transistor MOSFET transistor and, in some examples, may be a type AOD424.

Turning now to the interrupter 214, the interrupter 214 may be configured to interrupt power flow to the battery load management circuit 216 responsive to the disabling circuit 212 being triggered. As introduced, the interrupter 214 may be a fuse (F1) configured to blow. The interrupter 214 may also be a circuit breaker that can be reset after tripping.

Turning now to the battery load management circuit 216, the battery load management circuit 216 may function as a power circuit that controls the flow of power from the power source 202 into the electrical load 206. In some examples, the battery load management circuit 216 may include U1, Q3, and Q4. In some examples, Q3 and Q4 may also be MOSFET transistors of the type AOD424. The UI may be a high voltage CMOS-based protection integrated circuit for over-charge/discharge of a rechargeable two-cell Lithium-ion (Li+) / Lithium polymer. The UI may further include a short circuit protection circuit for preventing external short circuit current. The UI may also include protection circuits to protect against the excess discharge-current and excess charge current. Each of these integrated circuits may be composed of multiple voltage detectors (e.g., 2, 3, 4, 5, 6, 7, 8, 9, 10, or more than 10), a reference unit, a delay circuit, a short circuit protector, an oscillator, a counter, and a logic circuit. As part of the battery load management circuit 216 or separately may be provided a battery charging circuit.

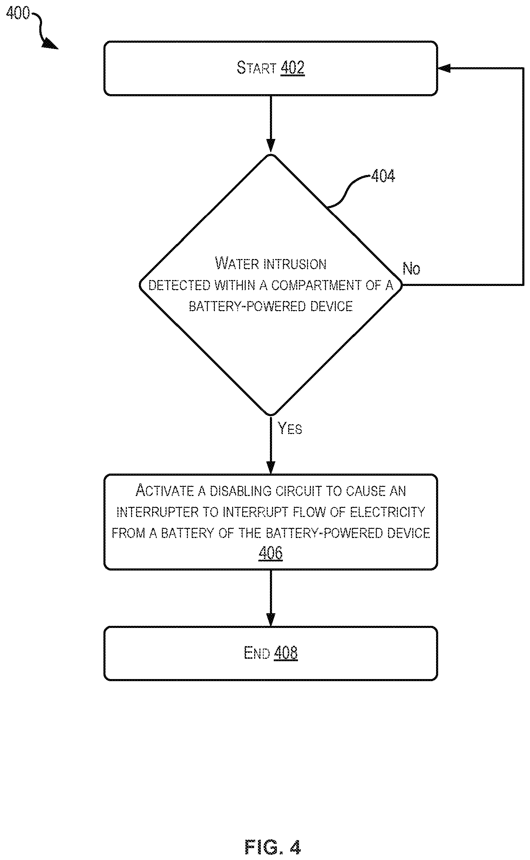

FIG. 4 illustrates an example flowchart showing a process 400 for implementing techniques relating to electrically disconnecting a battery based on water sensing, according to at least one example. The process 400 may be performed by the circuitry 204. The process 400 may begin at block 402. At block 404, the process 400 includes determining whether water intrusion has been detected within a compartment of a battery-powered device. This block may be performed by the sensing circuit 208 as described herein (e.g., using a pair of probes). If the answer at block 404 is NO, the process 400 returns to the starting block at block 402. If the answer at block 404 is YES, the process 400 continues to block 406. At block 406, the process 400 includes activating a disabling circuit to cause an interrupter to interrupt flow of electricity from a battery of the battery-powered device. This block may be performed by the disabling circuit 212 and the interrupter 218, as described herein. After the circuit has been interrupted/disabled, the process 400 may end at 408.

In the following, further examples are described to facilitate the understanding of the present disclosure.

Example 1. In this example, there is provided system for battery-powered swimming pool cleaners or other swimming pool equipment, including:
a sensing circuit to detect the presence of water;
a power circuit electrically connected to the sensing circuit and configured to direct power to an electrical load; and
a disabling circuit electrically connected to the sensing circuit and the power circuit, and configured to:
   receive a signal from the sensing circuit; and
   responsive to receiving the signal, disable the power circuit from powering the electrical load.

Example 2. In this example, there is provided a system of any of the subsequent or preceding claims, wherein the system further includes a fuse electrically connected between the power circuit and the disabling circuit, and wherein disabling the power circuit from powering the electrical load includes causing the fuse to blow.

Example 3. In this example, there is provided a system of any of the subsequent or preceding claims, wherein the sensing circuit includes one or more probe sets.

Example 4. In this example, there is provided a system of any of the subsequent or preceding claims, wherein the sensing circuit, the power circuit, and the disabling circuit are formed in on a single circuit board.

Example 5. In this example, there is provided a system of any of the subsequent or preceding claims, further including a power source electrically connected to the power circuit and the disabling circuit, the power source configured to power the electrical load.

Example 6. In this example, there is provided a system of any of the subsequent or preceding claims, wherein the power source includes one or more batteries.

Example 7. In this example, there is provided a system of any of the subsequent or preceding claims, wherein the one or more batteries are rechargeable.

Example 8. In this example, there is provided a system of any of the subsequent or preceding claims, wherein the sensing circuit is further configured to detect the presence of water at the power source.

Example 9. In this example, there is provided a system of any of the subsequent or preceding claims, wherein disabling the power circuit from powering the electrical load electrically disconnects the power source from the electrical load, thereby preventing the power source from draining and charging.

Example 10. In this example, there is provided a system of any of the subsequent or preceding claims, further including an underwater device including a compartment that defines an interior volume, and wherein the sensing circuit, the power circuit, the disabling circuit, and the power source are disposed within the interior volume.

Example 11. In this example, there is provided a system of any of the subsequent or preceding claims, wherein the sensing circuit is further configured to detect the presence of water within the interior volume.

Example 12. In this example, there is provided a system of any of the subsequent or preceding claims, wherein the compartment is sealed against water ingress.

Example 13. In this example, there is provided a circuit board for battery-powered swimming pool cleaners or other swimming pool equipment, including:
a sensing circuit including a pair of probes to detect the presence of a liquid;
a power circuit to power an electrical load;
an electrical interrupter to interrupt flow of electricity to the power circuit; and
a crowbar circuit to cause the electrical interrupter to interrupt the flow of electricity to the power circuit responsive to receiving a signal from the sensing circuit.

Example 14. In this example, there is provided a circuit board of any of the subsequent or preceding claims, wherein the pair of probes is a first pair of probes, the circuit board further including a second pair of probes to detect the presence of the liquid.

Example 15. In this example, there is provided a circuit board of any of the subsequent or preceding claims, wherein the first pair of probes is disposed at a first end of the circuit board and configurable to detect the presence of the liquid at the first end of the circuit board, and the second pair of probes is disposed at a second end of the circuit board and configurable to detect the presence of the liquid at the second end of the circuit board.

Example 16. In this example, there is provided a circuit board of any of the subsequent or preceding claims, wherein the pair of probes is formed as a pair of traces in the circuit board.

Example 17. In this example, there is provided a circuit board of any of the subsequent or preceding claims, further including a time delay circuit electrically connected between the sensing circuit and the crowbar circuit.

Example 18. In this example, there is provided a circuit board of any of the subsequent or preceding claims, wherein the electrical interrupter includes at least one of a fuse or a circuit breaker.

Example 19. In this example, there is provided a circuit board of any of the subsequent or preceding claims, wherein the electrical interrupter is resettable or replaceable after the crowbar circuit has caused the electrical interrupter to interrupt the flow of electricity to the power circuit.

Example 20. In this example, there is provided a circuit board of any of the subsequent or preceding claims, wherein the crowbar circuit includes a switching circuit and a resistor electrically connected between the electrical interrupter and the sensing circuit.

Example 21. In this example, there is provided a battery-powered underwater pool cleaning device, including:
a compartment that defines an interior volume;
a power source disposed within the interior volume and configured to power the battery-powered underwater pool cleaning device; and
circuitry electrically connected to the power source and disposed within the interior volume, and configured to:
   detect the presence of water in the interior volume; and
   disable the power to the battery-powered underwater pool cleaning device.

Example 22. In this example, there is provided a device of any of the subsequent or preceding claims, wherein the power source includes one or more batteries.

Example 23. In this example, there is provided a device of any of the subsequent or preceding claims, wherein the compartment is sealed against water ingress into the interior volume.

Example 24. In this example, there is provided a device of any of the subsequent or preceding claims, wherein the circuitry includes:
a sensing circuit to detect the presence of water in the interior volume;
a power circuit electrically connected to the sensing circuit and configured to direct power from the power source to power the battery-powered underwater pool cleaning device; and
a disabling circuit electrically connected to the sensing circuit and the power circuit, and configured to disable the power to the battery-powered underwater pool cleaning device.

Example 25. In this example, there is provided a device of any of the subsequent or preceding claims, wherein the compartment includes a divider that divides the interior volume into a first interior sub-volume and a second interior sub-volume.

Example 26. In this example, there is provided a device of any of the subsequent or preceding claims, wherein the power source is disposed within the first interior sub-volume and the circuitry is disposed within the second interior sub-volume, and wherein the circuitry is configured to detect the presence of water in the first interior sub-volume.

Example 27. In this example, there is provided a device of any of the subsequent or preceding claims, wherein the circuitry includes a sensing circuit and other circuits, the sensing circuit including a pair of probes configured to detect the presence of water at a location that is spaced apart from the other circuits.

Example 28. In this example, there is provided a device of any of the subsequent or preceding claims, wherein the pair of probes and the power source are disposed within the first interior sub-volume and the other circuits are disposed within the second interior sub-volume.

Example 29. In this example, there is provided a device of any of the subsequent or preceding claims, wherein interrupting the power to the battery-powered underwater pool cleaning device includes electrically disconnecting the power source from the circuitry, thereby preventing the power source from powering the battery-powered underwater pool cleaning device.

Example 21. In this example, there is provided a method for battery-powered swimming pool cleaners or other swimming pool equipment, including:
detecting water intrusion within a compartment of a battery-powered device; and
responsive to detecting the water intrusion, activating a disabling circuit configured to cause an interrupting circuit to interrupt flow of electricity from a battery of the battery-powered device.

Example 31. In this example, there is provided a method of any of the subsequent or preceding claims, wherein the disabling circuit includes a crowbar circuit and the interrupting circuit includes a fuse.

Example 32. In this example, there is provided a method of any of the subsequent or preceding claims, wherein detecting the water intrusion within the compartment includes using a sensing circuit that includes a pair of probes to detect the presence of water within the compartment.

Example 33. In this example, there is provided a method of any of the subsequent or preceding claims, wherein activating the disabling circuit includes opening the disabling circuit to allow electrical current to flow to the interrupting circuit, wherein the electrical current includes a characteristic that exceeds a disabling threshold associated with the disabling circuit.

Example 34. In this example, there is provided a method of any of the subsequent or preceding claims, wherein the characteristic includes a voltage.

Example 35. In this example, there is provided a method of any of the subsequent or preceding claims, wherein activating the disabling circuit to cause the interrupting circuit to interrupt the flow of electricity from the battery includes electrically isolating the battery, thereby preventing the battery from discharging or charging

While the present subject matter has been described in detail with respect to specific embodiments thereof, it will be appreciated that those skilled in the art, upon attaining an understanding of the foregoing may readily produce alterations to, variations of, and equivalents to such embodiments. Accordingly, it should be understood that the present disclosure has been presented for purposes of example rather than limitation, and does not preclude inclusion of such modifications, variations, and/or additions to the present subject matter as would be readily apparent to one of ordinary skill in the art. Indeed, the methods and systems described herein may be embodied in a variety of other forms; furthermore, various omissions, substitutions and changes in the form of the methods and systems described herein may be made without departing from the scope of the invention as defined by the appended claims.

Although applicant has described devices and techniques for use principally with swimming pools and spas, persons skilled in the relevant field will recognize that the present invention may be employed in connection with other objects and in other manners. Finally, references to "pools" and "swimming pools" herein may also refer to spas or other water containing vessels used for recreation or therapy and for which cleaning is needed or desired.

Unless specifically stated otherwise, it is appreciated that throughout this specification discussions utilizing terms such as "processing," "computing," "calculating," "determining," and "identifying" or the like refer to actions or processes of a computing device, such as one or more computers or a similar electronic computing device or devices, that manipulate or transform data represented as physical, electronic or magnetic quantities within memories, registers, or other information storage devices, transmission devices, or display devices of the computing platform.

The system or systems discussed herein are not limited to any particular hardware architecture or configuration. A computing device can include any suitable arrangement of components that provide a result conditioned on one or more inputs. Suitable computing devices include multipurpose microprocessor-based computing systems accessing stored software that programs or configures the computing system from a general purpose computing apparatus to a specialized computing apparatus implementing one or more embodiments of the present subject matter. Any suitable programming, scripting, or other type of language or combinations of languages may be used to implement the teachings contained herein in software to be used in programming or configuring a computing device.

Embodiments of the methods disclosed herein may be performed in the operation of such computing devices. The order of the blocks presented in the examples above can be varied-for example, blocks can be re-ordered, combined, and/or broken into sub-blocks. Certain blocks or processes can be performed in parallel.

Conditional language used herein, such as, among others, "can," "could," "might," "may," "e.g.," and the like, unless specifically stated otherwise, or otherwise understood within the context as used, is generally intended to convey that certain examples include, while other examples do not include, certain features, elements, and/or steps. Thus, such conditional language is not generally intended to imply that features, elements and/or steps are in any way required for one or more examples or that one or more examples necessarily include logic for deciding, with or without author input or prompting, whether these features, elements and/or steps are included or are to be performed in any particular example.

Disjunctive language such as the phrase "at least one of X, Y, or Z," unless specifically stated otherwise, is otherwise understood within the context as used in general to present that an item, term, etc., may be either X, Y, or Z, or any combination thereof (e.g., X, Y, and/or Z). Thus, such disjunctive language is not generally intended to, and should not, imply that certain examples require at least one of X, at least one of Y, or at least one of Z to each be present.

Use herein of the word "or" is intended to cover inclusive and exclusive OR conditions. In other words, A or B or C includes any or all of the following alternative combinations as appropriate for a particular usage: A alone; B alone; C alone; A and B only; A and C only; B and C only; and all three of A and B and C.

The use of the terms "a" and "an" and "the" and similar referents in the context of describing the disclosed examples (especially in the context of the following claims) are to be construed to cover both the singular and the plural, unless otherwise indicated herein or clearly contradicted by context. The terms "comprising," "including," "having," and the like are synonymous and are used inclusively, in an open-ended fashion, and do not exclude additional elements, features, acts, operations, and so forth. Also, the term "or" is used in its inclusive sense (and not in its exclusive sense) so that when used, for example, to connect a list of elements, the term "or" means one, some, or all of the elements in the list. The use of "adapted to" or "configured to" herein is meant as open and inclusive language that does not foreclose devices adapted to or configured to perform additional tasks or steps. The term "connected" is to be construed as partly or wholly contained within, attached to, or joined together, even if there is something intervening. Recitation of ranges of values herein are merely intended to serve as a shorthand method of referring individually to each separate value falling within the range, unless otherwise indicated herein, and each separate value is incorporated into the specification as if it were individually recited herein. Additionally, the use of "based on" is meant to be open and inclusive, in that a process, step, calculation, or other action "based on" one or more recited conditions or values may, in practice, be based on additional conditions or values beyond those recited. Similarly, the use of "based at least in part on" is meant to be open and inclusive, in that a process, step, calculation, or other action "based at least in part on" one or more recited conditions or values may, in practice, be based on additional conditions or values beyond those recited. Headings, lists, and numbering included herein are for ease of explanation only and are not meant to be limiting.

## Claims

1. A system for battery-powered swimming pool cleaners (100) or other swimming pool equipment, comprising:
a sensing circuit (208) to detect the presence of water;
a power circuit (216) electrically connected to the sensing circuit (208) and configured to direct power to an electrical load (116, 206);
a disabling circuit (212) electrically connected to the sensing circuit (208) and the power circuit (216), and configured to:
receive a signal from the sensing circuit (208); and
responsive to receiving the signal, disable the power circuit (216) from powering the electrical load (116, 206);
a power source (202) electrically connected to the power circuit (216) and the disabling circuit (212), the power source (202) being configured to power the electrical load (116, 206); and
an underwater device (100) comprising a compartment (106) that defines an interior volume, and wherein the sensing circuit (208), the power circuit (216), the disabling circuit (212), and the power source (202) are disposed within the interior volume.

2. The system of claim 1, wherein the sensing circuit (208) is further configured to detect the presence of water within the interior volume, and wherein the compartment is preferably sealed against water ingress.

3. A circuit board (114) for battery-powered swimming pool cleaners (100) or other swimming pool equipment, comprising:
a sensing circuit (208) comprising a pair of probes (302, P₁, P₂) to detect the presence of a liquid;
a power circuit (216) to power an electrical load (116, 206);
an electrical interrupter (214) to interrupt flow of electricity to the power circuit (216); and
a crowbar circuit (212) to cause the electrical interrupter (214) to interrupt the flow of electricity to the power circuit (216) responsive to receiving a signal from the sensing circuit (208).

4. The circuit board (114) of claim 3, wherein the pair of probes (302, P₁, P₂) is a first pair of probes, the circuit board further comprising a second pair of probes to detect the presence of the liquid.

5. The circuit board (114) of claim 4, wherein the first pair of probes (302, P₁, P₂) is disposed at a first end of the circuit board (114) and configurable to detect the presence of the liquid at the first end of the circuit board (114), and the second pair of probes is disposed at a second end of the circuit board (114) and configurable to detect the presence of the liquid at the second end of the circuit board (114).

6. The circuit board (114) of claim 3, wherein the pair of probes (302, P₁, P₂) is formed as a pair of traces in the circuit board.

7. The circuit board (114) of claim 3, further comprising a time delay circuit (210) electrically connected between the sensing circuit (208) and the crowbar circuit (212).

8. The circuit board (114) of claim 3, wherein the electrical interrupter (214) comprises at least one of a fuse or a circuit breaker.

9. The circuit board (114) of claim 3, wherein the crowbar circuit (212) comprises a switching circuit and a resistor electrically connected between the electrical interrupter (214) and the sensing circuit (208).

10. A battery-powered underwater pool cleaning device (100), comprising:
a compartment (106) that defines an interior volume;
a power source (202) disposed within the interior volume and configured to power the battery-powered underwater pool cleaning device (100); and
circuitry (204) electrically connected to the power source (202) and disposed within the interior volume, and configured to:
detect the presence of water in the interior volume; and
disable the power to the battery-powered underwater pool cleaning device (100).

11. The battery-powered underwater pool cleaning device (100) of claim 10, wherein the power source (202) comprises one or more batteries (112).

12. The battery-powered underwater pool cleaning device (100) of claim 10, wherein the circuitry (204) comprises:
a sensing circuit (208) to detect the presence of water in the interior volume;
a power circuit (216) electrically connected to the sensing circuit (208) and configured to direct power from the power source (202) to power the battery-powered underwater pool cleaning device (100); and
a disabling circuit (212) electrically connected to the sensing circuit (208) and the power circuit (216), and configured to disable the power to the battery-powered underwater pool cleaning device (100).

13. The battery-powered underwater pool cleaning device (100) of claim 10, wherein the compartment (106) comprises a divider that divides the interior volume into a first interior sub-volume and a second interior sub-volume.

14. The battery-powered underwater pool cleaning device (100) of claim 13, wherein the power source (202) is disposed within the first interior sub-volume and the circuitry (204) is disposed within the second interior sub-volume, and wherein the circuitry is configured to detect the presence of water in the first interior sub-volume.

15. The battery-powered underwater pool cleaning device (100) of claim 13, wherein the circuitry (204) comprises a sensing circuit (208) and other circuits, the sensing circuit (208) comprising a pair of probes (302, P₁, P₂) configured to detect the presence of water at a location that is spaced apart from the other circuits, and wherein the pair of probes (302, P₁, P₂) and the power source (202) are preferably disposed within the first interior sub-volume and the other circuits are preferably disposed within the second interior sub-volume.

## Patentansprüche

1. System für batteriebetriebene Schwimmbeckenreiniger (100) oder andere Schwimmbeckenausrüstung, umfassend:
eine Erfassungsschaltung (208) zur Detektion der Anwesenheit von Wasser;
eine Energieschaltung (216), welche elektrisch mit der Erfassungsschaltung (208) verbunden ist und welche dazu eingerichtet ist, Energie zu einer elektrischen Last (116, 206) zu führen;
eine Abschaltschaltung (212), welche elektrisch mit der Erfassungsschaltung (208) und der Energieschaltung (216) verbunden ist und welche eingerichtet ist, zum:
Empfangen eines Signals von der Erfassungsschaltung (208); und
als Reaktion auf das Empfangen des Signals, Abschalten der Energieversorgung der elektrischen Last (116, 206) durch die Energieschaltung (216);
eine Energiequelle (202), welche elektrisch mit der Energieschaltung (216) und der Abschaltschaltung (212) verbunden ist, wobei die Energiequelle (202) dazu eingerichtet ist, die elektrische Last (116, 206) mit Energie zu versorgen; und
eine Unterwasser-Vorrichtung (100), welche einen Raum (106) umfasst, welcher ein inneres Volumen definiert, und wobei die Erfassungsschaltung (208), die Energieschaltung (216), die Abschaltschaltung (212) und die Energiequelle (202) in dem inneren Volumen angeordnet sind.

2. System nach Anspruch 1, wobei die Erfassungsschaltung (208) ferner dazu eingerichtet ist, die Anwesenheit von Wasser innerhalb des inneren Volumens zu detektieren, und wobei der Raum vorzugsweise gegen ein Eindringen von Wasser abgedichtet ist.

3. Leiterplatte (114) für batteriebetriebene Schwimmbeckenreiniger (100) oder andere Schwimmbeckenausrüstung, umfassend:
eine Erfassungsschaltung (208), welche ein Paar von Sonden (302, P₁, P₂) umfasst, um die Anwesenheit einer Flüssigkeit zu detektieren;
eine Energieschaltung (216), um eine elektrische Last (116, 206) mit Energie zu versorgen;
einen elektrischen Unterbrecher (214), um einen Stromfluss zu der Energieschaltung (216) zu unterbrechen; und
einen Überspannungsschutz (212), um den elektrischen Unterbrecher (214) dazu zu veranlassen, den Stromfluss zu der Energieschaltung (216) als Reaktion auf ein Empfangen eines Signals von der Erfassungsschaltung (208) zu unterbrechen.

4. Leiterplatte (114) nach Anspruch 3, wobei das Paar von Sonden (302, P₁, P₂) ein erstes Paar von Sonden ist, wobei die Leiterplatte ferner ein zweites Paar von Sonden umfasst, um die Anwesenheit der Flüssigkeit zu detektieren.

5. Leiterplatte (114) nach Anspruch 4, wobei das erste Paar von Proben (302, P₁, P₂) an einem ersten Ende der Leiterplatte (114) angeordnet ist und dazu einrichtbar ist, die Anwesenheit der Flüssigkeit an dem ersten Ende der Leiterplatte (114) zu detektieren, und wobei das zweite Paar von Sonden an einem zweiten Ende der Leiterplatte (114) angeordnet ist und dazu einrichtbar ist, die Anwesenheit der Flüssigkeit an dem zweiten Ende der Leiterplatte (114) zu detektieren.

6. Leiterplatte (114) nach Anspruch 3, wobei das Paar von Sonden (302, P₁, P₂) als ein Paar von Abtastspuren in der Leiterplatte gebildet ist.

7. Leiterplatte (114) nach Anspruch 3, ferner umfassend eine Zeitverzögerungsschaltung (210), welche elektrisch zwischen die Erfassungsschaltung (208) und dem Überspannungsschutz (212) geschaltet ist.

8. Leiterplatte (114) nach Anspruch 3, wobei der elektrische Unterbrecher (214) wenigstens eines aus einer Sicherung oder einem Leistungsschalter umfasst.

9. Leiterplatte (114) nach Anspruch 3, wobei der Überspannungsschutz (212) eine Umschaltschaltung und einen Widerstand umfasst, welche elektrisch zwischen den elektrischen Unterbrecher (214) und die Erfassungsschaltung (208) geschaltet sind.

10. Batteriebetriebene Unterwasser-Beckenreinigungsvorrichtung (100), umfassend:
einen Raum (106), welcher ein inneres Volumen definiert;
eine Energiequelle (202), welche innerhalb des inneren Volumens angeordnet ist und welche dazu eingerichtet ist, die batteriebetriebene Unterwasser-Beckenreinigungsvorrichtung (100) mit Energie zu versorgen; und
Schaltkreise (204), welche elektrisch mit der Energiequelle (202) verbunden sind und innerhalb des inneren Volumens angeordnet sind und welche eingerichtet sind, zum:
Detektieren der Anwesenheit von Wasser in dem inneren Volumen; und
Abschalten der Energieversorgung der batteriebetriebenen Unterwasser-Beckenreinigungsvorrichtung (100).

11. Batteriebetriebene Unterwasser-Beckenreinigungsvorrichtung (100) nach Anspruch 10, wobei die Energiequelle (202) eine oder mehrere Batterien (112) umfasst.

12. Batteriebetriebene Unterwasser-Beckenreinigungsvorrichtung (100) nach Anspruch 10, wobei die Schaltkreise (204) umfassen:
eine Erfassungsschaltung (208), um die Anwesenheit von Wasser in dem inneren Volumen zu detektieren;
eine Energieschaltung (216), welche elektrisch mit der Erfassungsschaltung (208) verbunden ist und welche dazu eingerichtet ist, Energie von der Energiequelle (202) zur Energieversorgung zu der batteriebetriebenen Unterwasser-Beckenreinigungsvorrichtung (100) zu führen; und
eine Abschaltschaltung (212), welche elektrisch mit der Erfassungsschaltung (208) und der Energieschaltung (216) verbunden ist und welche dazu eingerichtet ist, die Energieversorgung der batteriebetriebenen Unterwasser-Beckenreinigungsvorrichtung (100) abzuschalten.

13. Batteriebetriebene Unterwasser-Beckenreinigungsvorrichtung (100) nach Anspruch 10, wobei der Raum (106) eine Unterteilungseinheit umfasst, welche das innere Volumen in ein erstes inneres Teilvolumen und ein zweites inneres Teilvolumen unterteilt.

14. Batteriebetriebene Unterwasser-Beckenreinigungsvorrichtung (100) nach Anspruch 13, wobei die Energiequelle (202) innerhalb des ersten inneren Teilvolumens angeordnet ist und die Schaltkreise (204) innerhalb des zweiten inneren Teilvolumens angeordnet sind, und wobei die Schaltkreise dazu eingerichtet sind, die Anwesenheit von Wasser in dem ersten inneren Teilvolumen zu detektieren.

15. Batteriebetriebene Unterwasser-Beckenreinigungsvorrichtung (100) nach Anspruch 13, wobei die Schaltkreise (204) eine Erfassungsschaltung (208) und andere Schaltungen umfassen, wobei die Erfassungsschaltung (208) ein Paar von Sonden (302, P₁, P₂) umfasst, welche dazu eingerichtet sind, die Anwesenheit von Wasser an einer Stelle zu detektieren, welche von den anderen Schaltungen beabstandet ist, und wobei das Paar von Sonden (302, P₁, P₂) und die Energiequelle (202) vorzugsweise innerhalb des ersten inneren Teilvolumens angeordnet sind und die anderen Schaltungen vorzugsweise innerhalb des zweiten inneren Teilvolumens angeordnet sind.

## Revendications

1. Système pour nettoyeurs de piscine alimentés par batterie (100) ou autres équipements de piscine, comprenant :
un circuit de détection (208) pour détecter la présence d'eau ;
un circuit d'alimentation (216) connecté électriquement au circuit de détection (208) et conçu pour diriger l'alimentation vers une charge électrique (116, 206) ;
un circuit de désactivation (212) connecté électriquement au circuit de détection (208) et au circuit d'alimentation (216) et conçu pour :
recevoir un signal provenant du circuit de détection (208) ; et
en réponse à la réception du signal, empêcher le circuit d'alimentation (216) d'alimenter la charge électrique (116, 206) ;
une source d'alimentation (202) connectée électriquement au circuit d'alimentation (216) et au circuit de désactivation (212), la source d'alimentation (202) étant conçue pour alimenter la charge électrique (116, 206) ; et
un dispositif immergé (100) comprenant un compartiment (106) qui définit un volume intérieur, sachant que le circuit de détection (208), le circuit d'alimentation (216), le circuit de désactivation (212) et la source d'alimentation (202) sont disposés à l'intérieur du volume intérieur.

2. Système selon la revendication 1,
dans lequel le circuit de détection (208) est en outre conçu pour détecter la présence d'eau à l'intérieur du volume intérieur, et le compartiment est de préférence étanche à la pénétration d'eau.

3. Carte de circuit imprimé (114) pour nettoyeurs de piscine alimentés par batterie (100) ou autres équipements de piscine, comprenant :
un circuit de détection (208) comprenant une paire de sondes (302, P₁, P₂) pour détecter la présence d'un liquide ;
un circuit d'alimentation (216) pour alimenter une charge électrique (116, 206) ;
un interrupteur électrique (214) pour interrompre le flux d'électricité vers le circuit d'alimentation (216) ; et
un circuit de blocage (212) pour amener l'interrupteur électrique (214) à interrompre le flux d'électricité vers le circuit d'alimentation (216) en réponse à la réception d'un signal provenant du circuit de détection (208).

4. Carte de circuit imprimé (114) selon la revendication 3,
dans laquelle la paire de sondes (302, P₁, P₂) est une première paire de sondes, la carte de circuit imprimé comprenant en outre une deuxième paire de sondes pour détecter la présence du liquide.

5. Carte de circuit imprimé (114) selon la revendication 4,
dans laquelle la première paire de sondes (302, P₁, P₂) est disposée à une première extrémité de la carte de circuit imprimé (114) et peut être conçue pour détecter la présence du liquide à la première extrémité de la carte de circuit imprimé (114), et la deuxième paire de sondes est disposée à une deuxième extrémité de la carte de circuit imprimé (114) et peut être conçue pour détecter la présence du liquide à la deuxième extrémité de la carte de circuit imprimé (114).

6. Carte de circuit imprimé (114) selon la revendication 3,
dans laquelle la paire de sondes (302, P₁, P₂) est formée comme une paire de pistes dans la carte de circuit imprimé.

7. Carte de circuit imprimé (114) selon la revendication 3,
comprenant en outre un circuit à retard (210) connecté électriquement entre le circuit de détection (208) et le circuit de blocage (212).

8. Carte de circuit imprimé (114) selon la revendication 3,
dans laquelle l'interrupteur électrique (214) comprend au moins un fusible ou un disjoncteur.

9. Carte de circuit imprimé (114) selon la revendication 3,
dans laquelle le circuit de blocage (212) comprend un circuit de commutation et une résistance connectée électriquement entre l'interrupteur électrique (214) et le circuit de détection (208).

10. Dispositif immergé de nettoyage de piscine alimenté par batterie (100), comprenant :
un compartiment (106) qui définit un volume intérieur ;
une source d'alimentation (202) disposée à l'intérieur du volume intérieur et conçue pour alimenter le dispositif immergé de nettoyage de piscine alimenté par batterie (100) ; et
un ensemble de circuits (204) connecté électriquement à la source d'alimentation (202) et disposé à l'intérieur du volume intérieur et conçu pour :
détecter la présence d'eau dans le volume intérieur ; et
désactiver l'alimentation du dispositif immergé de nettoyage de piscine alimenté par batterie (100).

11. Dispositif immergé de nettoyage de piscine alimenté par batterie (100) selon la revendication 10,
dans lequel la source d'alimentation (202) comprend une ou plusieurs batteries (112).

12. Dispositif immergé de nettoyage de piscine alimenté par batterie (100) selon la revendication 10,
dans lequel l'ensemble de circuits (204) comprend :
un circuit de détection (208) pour détecter la présence d'eau dans le volume intérieur ;
un circuit d'alimentation (216) connecté électriquement au circuit de détection (208) et conçu pour diriger l'alimentation provenant de la source d'alimentation (202) afin d'alimenter le dispositif immergé de nettoyage de piscine alimenté par batterie (100) ; et
un circuit de désactivation (212) connecté électriquement au circuit de détection (208) et au circuit d'alimentation (216) et conçu pour désactiver l'alimentation du dispositif immergé de nettoyage de piscine alimenté par batterie (100).

13. Dispositif immergé de nettoyage de piscine alimenté par batterie (100) selon la revendication 10,
dans lequel le compartiment (106) comprend une cloison qui divise le volume intérieur en un premier sous-volume intérieur et un deuxième sous-volume intérieur.

14. Dispositif immergé de nettoyage de piscine alimenté par batterie (100) selon la revendication 13,
dans lequel la source d'alimentation (202) est disposée à l'intérieur du premier sous-volume intérieur et l'ensemble de circuits (204) est disposé à l'intérieur du deuxième sous-volume intérieur, et l'ensemble de circuits est conçu pour détecter la présence d'eau dans le premier sous-volume intérieur.

15. Dispositif immergé de nettoyage de piscine alimenté par batterie (100) selon la revendication 13,
dans lequel l'ensemble de circuits (204) comprend un circuit de détection (208) et d'autres circuits, le circuit de détection (208) comprenant une paire de sondes (302, P₁, P₂) conçues pour détecter la présence d'eau à un emplacement espacé des autres circuits, et la paire de sondes (302, P₁, P₂) et la source d'alimentation (202) sont de préférence disposées à l'intérieur du premier sous-volume intérieur et les autres circuits sont de préférence disposés à l'intérieur du deuxième sous-volume intérieur.
